# EUROPÄISCHE PATENTSCHRIFT

(11) **EP 2 648 962 B1**
(45) Veröffentlichungstag und Bekanntmachung des Hinweises auf die Patenterteilung: **22.07.2015**
(21) Anmeldenummer: 11805403.0
(22) Anmeldetag: 07.12.2011
(51) Int. Cl.: B62D 3/12, F16H 55/28

(54) **ZAHNSTANGENLENKUNG MIT EINFACHER ABDICHTUNG**
RACK-AND-PINION STEERING SYSTEM HAVING A SIMPLE SEALING
DIRECTION À CRÉMAILLÈRE AVEC ÉTANCHÉITÉ SIMPLE

(30) Priorität: 08.12.2010 DE 102010053770
(43) Veröffentlichungstag der Anmeldung: 16.10.2013
(73) Patentinhaber: ThyssenKrupp Presta AG, 9492 Eschen (LI)
(72) Erfinder: BAHR, Joachim, 73207 Plochingen (DE); BREUNING, Edwin, 73770 Denkendorf (DE); HEINZEN, Paul, 56759 Laubach (DE); VOHWINKEL, Kai, 73262 Reichenbach (DE)
(74) Vertreter: Lenzing Gerber Stute
(86) Internationale Anmeldenummer: PCT/EP2011/006149
(87) Internationale Veröffentlichungsnummer: WO 2012/076169

(56) Entgegenhaltungen:
- US-A1- 2008 034 910

## Beschreibung

Die vorliegende Erfindung betrifft eine Zahnstangenlenkung wie bekannt aus US 2008/0034910 A, für Kraftfahrzeuge mit den Merkmalen des Oberbegriffs des Anspruchs 1.

Zahnstangenlenkungen, bei denen ein über ein Lenkrad und eine Lenkwelle betätigtes Ritzel mit einem Zahnsegment einer linear beweglichen Zahnstange zur Einstellung des Lenkwinkels von gelenkten Rädern eines Fahrzeugs kämmt, sind seit langem bekannt, beispielsweise aus der US-Patentschrift US 326,244. Das Ritzel und die Zahnstange sollen im Betrieb in spielfreiem Eingriff stehen.

Bei Kraftfahrzeugen wird der spielfreie Eingriff üblicherweise über ein Druckstück bewirkt, dass von der dem Ritzel gegenüber liegenden Seite her die Zahnstange gegen das Ritzel drängt. Das Druckstück ist mittels einer Feder vorgespannt und kann gegen den Druck der Feder einen gewissen Hub ausführen, der im Bereich von 0,01 bis zu 0,6 Millimeter liegt. Die Einstellung der Vorspannung und des Hubs erfolgt über eine Stellschraube, die mit einem Gewinde in dem Gehäuse der Lenkung axial verstellbar ist. Dies ist zum Beispiel aus der Patentanmeldung US 2003/0188918 A1 bekannt. Die Stellschraube wird in der gewählten Einstellposition mittels einer Kontermutter gesichert.

Eine weitere Anforderung besteht in der Abdichtung des Lenkungsgehäuses gegenüber der Umgebung im Bereich des Druckstücks. Diese Abdichtung wird üblicherweise durch einen Ohrring vorgenommen, der in eine umfangsseitig umlaufenden Nut des Druckstücks eingelegt wird und gegen die Wandung der Bohrung in dem Lenkungsgehäuse abdichtet. Solche Dichtungen sind aus der Druckschrift US 5,272,933 und aus der DE 102 30 602 A1 bekannt. Die erstgenannte Druckschrift zeigt ebenfalls eine Einstellung des Druckstücks mit einer Stellschraube, die durch eine Kontermutter gesichert ist. Die zweite Druckschrift zeigt eine Druckstückanordnung zur Vorspannung eines Kugellagers, bei der das Druckstück mit einem Ohrring in einer Gehäusebohrung abgedichtet ist und ein Deckel mit einem zweiten Ohrring gegenüber der Gehäusebohrung dichtend oberhalb des Druckstücks ebenfalls in diese Bohrung eingesetzt ist. Die Befestigung des Deckels erfolgt nicht über ein Gewinde, sondern durch Verstemmen des Gehäuses.

Schließlich ist aus der Druckschrift EP 1 291 261 A2 eine Druckstückanordnung bekannt, bei der das Druckstück über eine Schraubenfeder und einen Deckel gegen die Zahnstange vorgespannt wird und der Deckel über einen umlaufenden Ohrring mit einem Ringbund des Gehäuses in Anlage kommt und dadurch abdichtet. Der Deckel ist mit einem Sicherungsring in dem Lenkungsgehäuse gesichert und somit nicht einstellbar.

Die Konstruktion der Abdichtung im Bereich des Druckstücks und die Sicherung der Einstellschraube gegen unbeabsichtigtes Verdrehen sind Konstruktionsmerkmale, die im Stand der Technik relativ aufwendig gelöst sind. Die Zahl der erforderlichen Fertigungsschritte, der Komponenten und der Montageschritte ist groß.

Es ist deshalb Aufgabe der vorliegenden Erfindung, eine Zahnstangenlenkung zu schaffen, bei der die Herstellung und die Montage im Bereich des einstellbaren Druckstücks vereinfacht sind. Die Fertigung der Zahnstangenlenkung soll dadurch schneller und preiswerter möglich sein.

Diese Aufgabe wird von einer Zahnstangenlenkung mit den Merkmalen des Anspruchs 1 gelöst.

Weil in dem Gewindebereich der Druckstückbohrung eine in Radialrichtung nach außen eingestochenen Nut vorgesehen ist und weil in dieser Nut ein Dichtungsring, vorzugsweise aus einem thermoplastischen Material, eingelegt ist, kann die Stellschraube bei der Montage in diesem Gewindebereich in den Ring einschneiden und dadurch sowohl die Abdichtung als auch die Sicherung der Stellschraube gegen unbeabsichtigtes Lösen erzielt werden. Ein besonders einfacher Aufbau wird dadurch möglich, dass die Stellschraube als Tiefziehteil gefertigt ist.

In einer weiteren, besonders vorteilhaften Ausgestaltung der Erfindung kann die Nut durch ein nicht spanabhebendes Verfahren und die Struktur durch ein Prägeverfahren in das Gehäuse eingebracht werden.

Der in der Nut einliegende Ring ist bevorzugt aus PTFE gefertigt.

Beim Eindrehen der Stellschraube schneidet das Gewinde der Schraube in den PTFE Ring. Dies führt zu einer Klemmwirkung auf die Schraube.

Gleichzeitig wird durch das Zerschneiden eine Dichtwirkung erzeugt, da das Flankenspiel des Gewindes reduziert wird und das PDFE zwischen den Flanken eine dichtende Schicht bildet.

Es ist weiter vorteilhaft, die Nut in Ihrem zylindrischen Außenbereich mit einer Struktur zu versehen, die das Mitdrehen des Ringes beim Einschrauben der Stellschraube verhindert.

Nachfolgend wird ein Ausführungsbeispiel der vorliegenden Erfindung anhand der Zeichnungen näher beschrieben. Es zeigen:
- Fig. 1:: die Druckstückbohrung eines Lenkgetriebes im Längsschnitt;
- Fig. 2:: den Bereich aus Figur 1 mit eingesetzter Stellschraube; sowie
- Fig. 3:: den Bereich des Druckstücks aus Figur 1 in einer perspektivischen Darstellung.

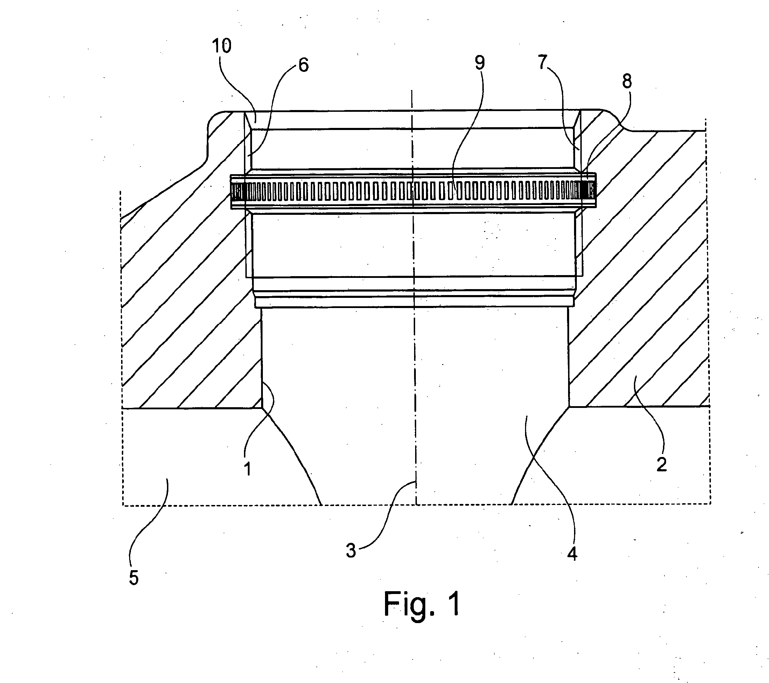

In der Figur 1 ist der Bereich einer Druckstückbohrung 1 in einem Lenkgetriebegehäuse 2 in einem vergrößerten Längsschnitt dargestellt.

Das Lenkgetriebegehäuse 2 weist hier die Druckstückbohrung 1 auf, die in Richtung einer Achse 3 etwa rotationssymmetrisch ausgebildet ist. Die Druckstückbohrung 1 weist eine zylindrische Mantelfläche 4 auf, die als Führung für ein hier nicht dargestelltes Druckstück dient. Quer zu der Achse 3, in der Figur 1 horizontal, verläuft eine Durchgangsbohrung 5 durch das Lenkgetriebegehäuse 2, in der im Betrieb die Zahnstange axial verschieblich gelagert ist. Gegenüber der Druckstückbohrung 1 bezüglich der Zahnstange ist das Lenkritzel angeordnet. Dieser Bereich wurde wegen der besseren Übersichtlichkeit nicht dargestellt.

In Achsrichtung der Achse 3 ist anschließend an die Druckstückbohrung 1 ein im Durchmesser vergrößerter Bereich 6 vorgesehen, der mit einem Innengewinde 7 versehen ist. In dem Innengewinde wiederum ist eine bezüglich der Achse 3 radial nach außen eingestochene Nut 8 mit etwa rechteckigen Querschnitt vorgesehen. Die Nut 8 weist zudem an ihrer äußeren Umfangsfläche, die den Nutengrund darstellt, eine Rändelung 9 auf. Weiter ist in Axialrichtung 3 der Abschluss zur Außenseite des Lenkungsgehäuses 2 in konisch erweitert und bildet eine konische Fläche 10.

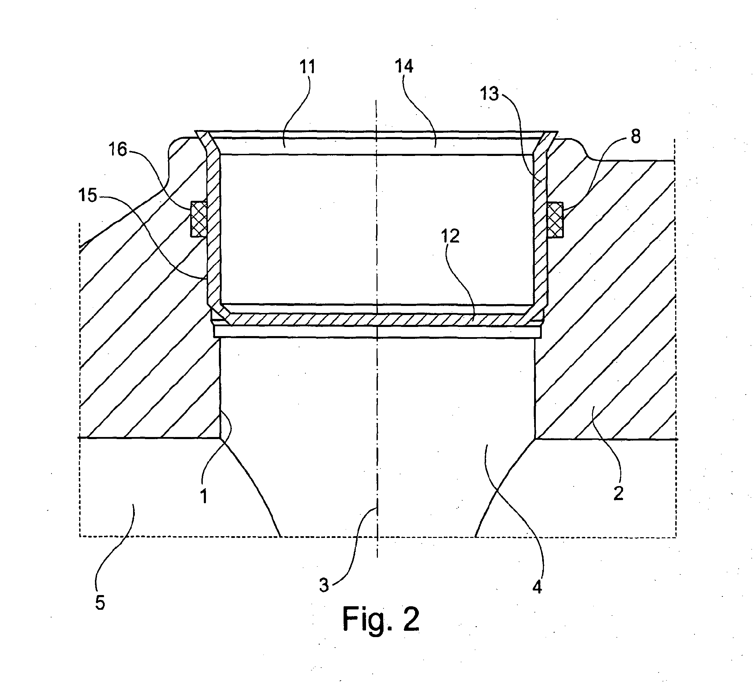

In der Figur 2 ist der Längsschnitt des Lenkungsgehäuses 2 aus Figur 1 veranschaulicht, wobei in die Bohrung 6 eine Stellschraube 11 eingesetzt ist. Die Stellschraube 11 weist einen topfförmigen Grundkörper mit einem geschlossenen, plattenförmigen Boden 12 sowie einer zylindrischen Wandung 13 auf, die sich nach oben zu dem offenen Ende des Grundkörpers in einem Bereich 14 konisch erweitert. An der Außenseite ist die Stellschraube 11 mit einem Außengewinde 15 versehen, dass zu dem Innengewinde 7 kompatibel ist. In der Nut 8 liegt ein Dicht- und Sicherungsring 16 ein. Wahlweise kann an der Stellschraube 11 koaxial zur Achse 3 eine hier nicht dargestellte Bohrung vorgesehen sein die mit mit einem, ebenfalls nicht dargestellten, Stopfen abgedichtet wird.

Der Dicht- und Sicherungsring 16 ist aus einem thermoplastischen und/oder einem elastomeren Material gefertigt, vorzugsweise aus PTFE. Er weist einen Innendurchmesser auf, der bei Montage in der Nut 8 bis in den Bereich des Gewindes 7 oder vorzugsweise in Radialrichtung der Achse 3 noch über das Gewinde 7 in den Innenbereich der Bohrung 6 hinein reicht.

Die Stellschraube 11 vorzugsweise aus einem Stahlblech im Tiefziehverfahren gefertigt. Sie kann in einfacher Weise mit einem Außengewinde versehen werden, das gerollt oder geschnitten sein kann. Die Stellschraube 11 kann weiter innen mit einer Vielzahnkontur oder einem ähnlichen Antrieb für ein Werkzeug versehen sein.

Bei der Montage der Servolenkung wird in bekannter Weise zunächst die Zahnstange in die Querbohrung 5 eingeführt. So dann wird ein Druckstück in die Bohrung 1 in Richtung der Achse 3 eingeführt, bis es auf der Zahnstange aufliegt. Ein Federmittel, beispielsweise eine Schraubenfeder wird als Druckfeder auf die der Zahnstange abgewandte Seite des Druckstücks gesetzt. Der Ring 16 wird in die Nut 8 eingesetzt. Sodann wird die Stellschraube 11 in die Bohrung 6, genauer gesagt in das Gewinde 7 eingeschraubt, bis das erforderliche Spiel von beispielsweise 0,1 Millimeter zwischen dem Boden 12 und dem Druckstück erzielt ist. Beim Einschrauben in das Gewinde 7 schneidet sich das Außengewinde 15 der Stellschraube 11 in die radial nach innen weisende Oberfläche des Dicht- und Sicherungsrings 16 ein. Hierdurch wird eine Abdichtung dieses Bereichs nach außen erzielt, die sowohl gegenüber Staub als auch gegenüber Wasser dicht ist. Außerdem wird bei geeigneter Materialwahl die Stellschraube 11 in dem Ring 16 so gut gesichert, dass eine unbeabsichtigte Verstellung der Stellschraube 11 ausgeschlossen ist. Es ist ersichtlich, dass der in soweit beschriebene Aufbau gegenüber dem Stand der Technik, der eingangs erläutert wurde, erheblich einfacher herzustellen und zu montieren ist. Die Prozesssicherheit bei der Fertigung wird dadurch erhöht. Insbesondere die Möglichkeit, die Stellschraube 11 im Tiefziehverfahren herzustellen, vereinfacht die Fertigung dieses Bauteils. Kontermuttern oder andere Sicherungsmittel können entfallen. Ebenfalls kann die Anfertigung einer Nut für einen Ohrring in dem einzusetzenden Druckstück entfallen.

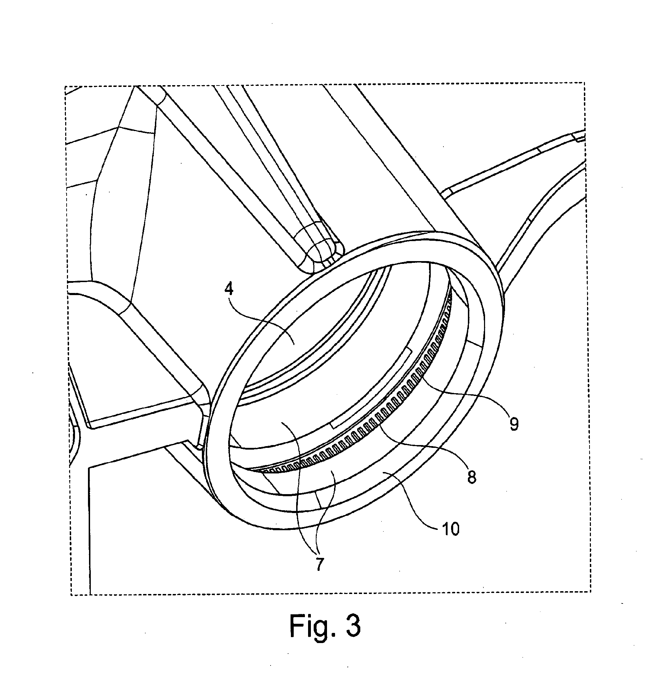

Die Figur 3 zeigt schließlich den in den Figuren 1 und 2 im Querschnitt dargestellten Bereich in einer perspektivischen Darstellung. Gleiche Bauelemente sind mit gleichen Bezugsziffern versehen. Die Rändelung 9 der Nut 8 bewirkt eine Sicherung des in die Nut 8 eingesetzten Ringes 16 gegen Verdrehen. Diese Rändelung 9 trägt damit zur Sicherung der Stellschraube 11 in ihrer Position dar.

## Patentansprüche

1. Zahnstangenienkung für ein Kraftfahrzeug, mit einem Lenkgetriebegehäuse (2), in dem eine Zahnstange verschieblich gelagert ist, und mit einer Druckstückbohrung (1), in der ein Druckstück angeordnet ist, welches mittels einer in einen Gewindebereich (6, 7) eingeschraubten Stellschraube (11) gegen die Zahnstange gedrängt wird, **dadurch gekennzeichnet, dass** in dem Gewindebereich (6, 7) der Druckstückbohrung eine in Radialrichtung nach außen eingestochenen Nut (8) vorgesehen ist und dass in dieser Nut (8) ein Dichtungsring (16) eingelegt ist.

2. Zahnstangenlenkung nach Anspruch 1, **dadurch gekennzeichnet, dass** die Stellschraube als Tiefziehteil gefertigt ist.

3. Zahnstangenlenkung nach einem der vorhergehenden Ansprüche, **dadurch gekennzeichnet, dass** der in der Nut einliegende Ring (16) aus einem thermoplastischen Material gefertigt ist.

4. Zahnstangenlenkung nach einem der vorhergehenden Ansprüche, **dadurch gekennzeichnet, dass** der in der Nut einliegende Ring (16) aus einem elastomeren Material gefertigt ist.

5. Zahnstangenlenkung nach einem der vorhergehenden Ansprüche, **dadurch gekennzeichnet, dass** der in der Nut einliegende Ring (16) aus PTFE gefertigt ist.

6. Zahnstangenlenkung nach einem der vorhergehenden Ansprüche, **dadurch gekennzeichnet, dass** die Nut in ihrem zylindrischen Außenbereich mit einer Struktur versehen ist.

7. Zahnstangenlenkung nach einem der vorhergehenden Ansprüche, **dadurch gekennzeichnet, dass** der in der Nut einliegende Ring (16) radial bezüglich einer Achse (3) bis in den Bereich eines Innengewindes (7) reicht.

8. Zahnstangenlenkung nach einem der vorhergehenden Ansprüche, **dadurch gekennzeichnet, dass** die Stellschraube mit einer Antriebsstruktur versehen ist.

9. Zahnstangenlenkung nach einem der vorhergehenden Ansprüche, **dadurch gekennzeichnet, dass** die Nut (8) durch ein nicht spanabhebendes Verfahren hergestellt wird.

10. Zahnstangenlenkung nach Anspruch 9, **dadurch gekennzeichnet, dass** die Struktur (9) im Nutgrund durch ein Prägeverfahren hergestellt wird.

11. Zahnstangenlenkung nach Anspruch 9, **dadurch gekennzeichnet, dass** die Struktur (9) im Nutgrund im Gießwerkzeug berücksichtigt ist.

## Claims

1. A rack-and-pinion steering system for a motor vehicle, comprising a steering box (2) in which a rack is displaceably mounted, and a thrust piece bore (1) in which a thrust piece is arranged, which is forced against the rack by means of a set screw (11) screwed into a thread zone (6, 7), **characterized in that** a groove (8) is provided, cut in the thread zone (6, 7) of the thrust piece bore outwards in radial direction and that a sealing ring (16) is inserted in said groove (8).

2. The rack-and-pinion steering system according to Claim 1, **characterized in that** the set screw is produced as a deep drawn part.

3. The rack-and-pinion steering system according to one of the preceding claims, **characterized in that** the ring (16) lying in the groove is produced from a thermoplastic material.

4. The rack-and-pinion steering system according to one of the preceding claims, **characterized in that** the ring (16) lying in the groove is produced from an elastomer material.

5. The rack-and-pinion steering system according to one of the preceding claims, **characterized in that** the ring (16) lying in the groove is produced from PTFE.

6. The rack-and-pinion steering system according to one of the preceding claims, **characterized in that** the groove is provided with a structure in its cylindrical outer region.

7. The rack-and-pinion steering system according to one of the preceding claims, **characterized in that** the ring (16) lying in the groove extends radially with respect to an axis (3) into the region of an inner thread (7).

8. The rack-and-pinion steering system according to one of the preceding claims, **characterized in that** the set screw is provided with a drive structure.

9. The rack-and-pinion steering system according to one of the preceding claims, **characterized in that** the groove (8) is produced by a non-cutting method.

10. The rack-and-pinion steering system according to Claim 9, **characterized in that** the structure (9) in the groove base is produced by an embossing method.

11. The rack-and-pinion steering system according to Claim 9, **characterized in that** the structure (9) in the groove base is taken into account in the casting mould.

## Revendications

1. Direction à crémaillère pour un véhicule automobile avec un carter de direction (2), dans lequel une crémaillère est logée mobile et avec un alésage de poussoir (1) dans lequel est disposé un poussoir qui est poussé contre la crémaillère au moyen d'une vis de réglage (11) vissée dans un secteur fileté (6, 7), **caractérisée en ce que** dans le secteur fileté (6, 7) de l'alésage de poussoir est prévue une rainure (8) pointée vers l'extérieur dans le sens radial et **en ce qu'** une bague d'étanchéité (16) est insérée dans cette rainure (8).

2. Direction à crémaillère selon la revendication 1, **caractérisée en ce que** la vis de réglage est fabriquée comme une pièce emboutie.

3. Direction à crémaillère selon l'une quelconque des revendications précédentes, **caractérisée en ce que** la bague (16) insérée dans la rainure est fabriquée à partir d'un matériau thermoplastique.

4. Direction à crémaillère selon l'une quelconque des revendications précédentes, **caractérisée en ce que** la bague (16) insérée dans la rainure est fabriquée à partir d'un matériau élastomère.

5. Direction à crémaillère selon l'une quelconque des revendications précédentes, **caractérisée en ce que** la bague (16) insérée dans la rainure est fabriquée à partir de polytétrafluoréthylène (PTFE).

6. Direction à crémaillère selon l'une quelconque des revendications précédentes, **caractérisée en ce que** la rainure est dotée d'une structure dans son secteur extérieur cylindrique.

7. Direction à crémaillère selon l'une quelconque des revendications précédentes, **caractérisée en ce que** la bague (16) insérée dans la rainure va, dans le sens radial par rapport à un axe (3), jusque dans le secteur d'un filetage intérieur (7).

8. Direction à crémaillère selon l'une quelconque des revendications précédentes, **caractérisée en ce que** la vis de réglage est dotée d'une structure d'entraînement.

9. Direction à crémaillère selon l'une quelconque des revendications précédentes, **caractérisée en ce que** la rainure (8) est réalisée par un procédé par enlèvement de copeaux.

10. Direction à crémaillère selon la revendication 9, **caractérisée en ce que** la structure (9) dans le fond de rainure est réalisée par un procédé d'estampage.

11. Direction à crémaillère selon la revendication 9, **caractérisée en ce que** la structure (9) dans le fond de rainure est prise en considération dans un outil de fonderie.
